(19) Europäisches Patentamt
European Patent Office
Office européen des brevets

(11) **EP 3 751 166 B1**

(12) **EUROPEAN PATENT SPECIFICATION**

(45) Date of publication and mention
of the grant of the patent:
**23.08.2023   Bulletin 2023/34**

(21) Application number: **19180196.8**

(22) Date of filing: **14.06.2019**

(51) International Patent Classification (IPC):
**F16D 48/02** *(2006.01)*         **B60T 7/04** *(2006.01)*
**B60T 7/08** *(2006.01)*

(52) Cooperative Patent Classification (CPC):
**F16D 48/02; B60T 7/042; B60T 7/085;
F15B 19/007; F15B 21/087;** F15B 15/1409;
F15B 2211/30565; F15B 2211/327;
F15B 2211/40592; F15B 2211/6336;
F16H 2061/0078

(54) **METHOD FOR DETERMINING A SYSTEM STATE OF A FLUID CYLINDER**

VERFAHREN ZUR BESTIMMUNG EINES SYSTEMZUSTANDS EINES FLUIDZYLINDERS

PROCÉDÉ POUR DÉTERMINER L'ÉTAT D'UN SYSTÈME D'UN CYLINDRE À FLUIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.12.2020   Bulletin 2020/51**

(73) Proprietor: **KNORR-BREMSE Systeme für
Nutzfahrzeuge GmbH
80809 München (DE)**

(72) Inventors:
• **SZABÓ, Adam
8130 Enying (HU)**
• **TRENCSENI, Balazs
2459 Rácalmás (HU)**
• **BENE, József Gergely
1174 Budapest (HU)**
• **FOJTYIK, Gábor
2091 Etyek (HU)**

(56) References cited:
**EP-A2- 1 414 059**         **JP-A- 2017 033 464**
**US-A1- 2018 292 278**

**Description**

The invention relates to a method for estimating a system state of a fluid cylinder, in particular to a method for estimating a system state of a fluid cylinder using an estimating system.

In order to provide an exact function of, e.g., a gearbox, acquiring of various states of a fluid cylinder, i.e. a hydraulic or a pneumatic cylinder, driving an actuator is necessary. The states are detected by sensors and estimated model-based state estimating systems. Hitherto, pressure sensors and temperature sensors are used for, e.g., determining a chamber pressure, temperatures in a chamber of the fluid cylinder, actuation forces of the cylinder, etc.. However, since multiple sensors are used for determining the states of the cylinder, a quantity of components of the, e.g., gearbox is large and manufacturing costs increase.

Furthermore, the pressure sensors and the temperature sensors used for determining the system states of the cylinder are expensive sensors and, moreover, due to their structures, it is difficult to adapt them to different actuator types so that various types of the sensors are necessary.

Document EP 1 414 059 A2 discloses a method having the features according to the preamble of claim 1.

In documents JP 2017 033464 A and US 2018/292 278 A1, a method for determining a system state of the fluid cylinder of an actuator system is disclosed. The methods respectively comprise the steps of detecting a position of a piston of the fluid cylinder and estimating at least one system state from the detected position of the piston.

The object underlying the invention is to remedy the above disadvantageous and to provide a method and an actuator system enabling a cost effective determination of states of a cylinder which can be easily adapted to various actuator types.

The object is achieved by a method according to claim1, a method according to claim 11 and an actuator system according to claim 12.

According to an aspect of the invention, a method comprises the steps of detecting a position of a piston of the cylinder, and of estimating at least one system state from the detected position of the piston.

The system state is, e.g., chamber pressures, temperatures, and actuation forces of the cylinder.

By this method, a provision of several and expensive sensors for a detection of the system state is not necessary and, due to the estimation of the system state merely from the detected position of the piston, the method can be easily adapted to various actuators.

In an advantageous implementation of the method, several system states are estimated from the detected position of the piston.

By estimating several system states various applications of the several system steps are possible to enhance on operation of the system.

According to an advantageous implementation of the method, the at least one system state or the several system states are estimated using a Kalman filter or an extended Kalman filter.

When using the Kalman filter as a control technologic observer model, an exact estimation of the system parameters is possible. The Kalman filter is a control technologic observer model comprising a specific mathematic structure enabling the use in real-time systems. Except from the system states, the Kalman filter also estimates its own fault to improve the results of the estimations. The extended Kalman filter is a non-linear version of the Kalman filter which can be used depending on a case of application.

According to a further advantageous implementation of the method, a system state estimation of a current time step is performed by using a system state estimation of a previous time step updated by detection data of the detected position of the piston.

Due to this structure of the method of estimating various systems states, the accuracy of the system states improves.

According to the invention, one of the system states is a chamber pressure of the cylinder, a temperature in a chamber of the cylinder, or a mass of a fluid.

By estimating one of these system states, a system state can easily and accurately be determined.

According to a further implementation of the method, a command to a solenoid valve is used as scheduling signal to calculate mass flow rates of the mass of the fluid into or from a chamber of the fluid cylinder to estimate the mass of the fluid.

By using the command as scheduling signal, the mass of the fluid in the chamber of the fluid cylinder can easily and accurately be estimated in case of loading and exhausting the chamber.

By a further implementation of the method, several solenoid valves connected to one chamber of the fluid cylinder are used, and the mass flow rates of the several solenoid valves connected the one chamber are summarized to estimate the mass of the fluid.

By this implementation, the system states of actuators having several solenoid valves connected to the one chamber can be easily estimated and determined.

By the invention, the system states are estimated based on an estimated contraction coefficient of the fluid, and the contraction coefficient is tuned to improve estimation accuracy.

The accuracy of the estimation is improved by tuning the contraction coefficient of the fluid.

In another implementation of the method, one of the system states is a piston velocity, an acceleration of the piston, and an actuation force exerted by the piston.

By estimating at least one of these system states, a system state can easily and accurately be determined.

According to a further implementation of the method, the system states are estimated based on a friction parameter of the fluid cylinder, and the friction parameter is tuned to improve estimation accuracy in the current time step.

Upon considering and tuning the friction parameters of the cylinder, the system states can accurately and easily be estimated and determined.

In a further implementation of the invention, the cylinder comprises a piston and a floating piston, the floating piston moves together with the piston on a first condition, and, alternatively, the piston moves independently from the floating piston on a second condition, and the system state is estimated depending on the presence of the first or second condition.

By considering the conditions of the floating piston with respect to the position of the piston, the system parameters in case of the floating piston cylinder can by estimated in either situation.

In a further implementation of the method, the detected position of the piston is used as a scheduling signal for estimating a behavior of an actuator with floating pistons under the first or second condition.

Due to this implementation, the method can be easily extended to cylinders having the piston and the floating piston.

According to a further aspect of the invention, a method for determining an actuating force in a fluid driven gear box actuator includes the method for determining the system state of the fluid cylinder, wherein the method for determining the actuating force in the fluid driven gear box actuator is used for synchronization of a gearbox during gear change.

By this method, the synchronization of the gearbox during gear change can easily performed even though various gear box actuators are used in various gearboxes.

According to another aspect of the invention, an actuator system comprises the fluid cylinder including the piston, a position sensor configured to detect the position of the piston, a solenoid valve configured to control the fluid cylinder, and an Electronic Control Unit (ECU) configured to determine a system state of the fluid cylinder, wherein the ECU is configured to determine the system state of the fluid cylinder based on the method for determining the system state of the fluid cylinder of the actuator based on the estimation of the system states from the detected position of the piston.

Due to this actuator system, the provision of the several and expensive sensors is not necessary so that manufacturing costs can be reduced and a necessary installation space is also reduced.

According to the invention, the system states comprise at least one of a chamber pressure of the fluid cylinder, a temperature in a chamber of the fluid cylinder, a mass of a fluid, a velocity of the piston, an acceleration of the piston, and an actuation force exerted by the piston.

By this actuator system, a system state can easily be determined upon reduced manufacturing costs due to a reduced number of components of the actuator system.

In the following, the invention is elucidated by means of embodiments referring to the attached drawings.

In particular,

Fig. 1    shows a system layout of an actuator system according to the invention;

Fig. 2    shows a first embodiment of a fluid cylinder of the actuator system of Fig. 1;

Fig. 3    shows a second embodiment of a fluid cylinder of the actuator system of Fig. 1;

Fig. 4    shows a third embodiment of a fluid cylinder of the actuator system of Fig. 1;

Fig. 5    shows a fourth embodiment of a fluid cylinder of the actuator system of Fig. 1, and

Fig. 6    shows a result of an estimation of system states performed by an extended Kalman filter.

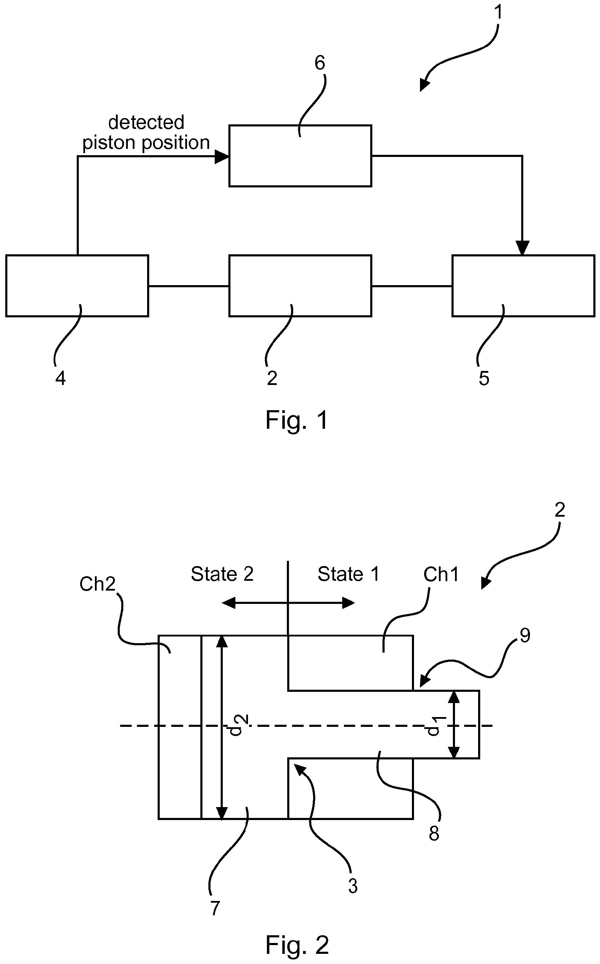

**Fig. 1** shows a system layout of an actuator system 1 according to the invention. The actuator system 1 forms a fluid driven gear box actuator system; however, alternatively, it can form an actuator system having another purpose. The actuator system 1 comprises a fluid cylinder 2 including a later described piston unit 3 (Fig. 2 to 5).

Furthermore, the actuator system 1 comprises a position sensor 4 configured to detect a position of a piston 7 (Fig. 2 to 5) of the piston unit 3, and solenoid valves 5 configured to control the fluid cylinder 2. Moreover, the actuator system 1 comprises an Electronic Control Unit (ECU) 6 configured to control the solenoid valves 5 and to estimate system states of the fluid cylinder 2. The position sensor 4 provides a detected piston position to the ECU 6 which, in turn, provides solenoid valve commands to the solenoid valves 5. In an alternative embodiment, the system states of the fluid cylinder 2 are not estimated by the ECU 6 also controlling the solenoid valves 5 but by another electronic unit. In yet another embodiment, merely one solenoid valve 5 is provided, in particular in the case of a single-acting fluid cylinder 2. The fluid cylinder 2 is formed as a pneumatic cylinder, however, alternatively, it can be formed as a hydraulic cylinder.

**Fig 2** shows a first embodiment of the fluid cylinder 2 of the actuator system 1 of Fig. 1. The fluid cylinder 2 comprises a circular cylindrical inner shape. Furthermore, the fluid cylinder 2 comprises the piston unit 3 comprising the piston 7 attached to a piston rod 8. Moreover, the fluid cylinder 2 comprises a piston rod orifice 9 configured to guide the piston rod 8.

An inner space of the fluid cylinder 2 is separated into a chamber Ch1 accommodating a portion of the piston rod 8 and a chamber Ch2 opposite to the piston rod 8 with respect to the piston 7 in a longitudinal direction of the fluid cylinder 2. In this first embodiment of the fluid cylinder 2, the chambers Ch1 and Ch2 are separated by the piston 7.

The piston rod 8 has a circular cross-section with a sectional diameter $d_1$. The piston 7 has a circular shape with a sectional diameter $d_2$. An inner wall of the fluid cylinder 2 has a sectional dimension $d_2$. The shapes and dimensions of the piston 7 and the inner shape of the fluid cylinder 2 and of the piston rod 8 and the piston rod orifice 9 respectively correspond to one another such that the chamber Ch1 and chamber Ch2 are formed as fluid tight chambers.

Forces acting to the piston 7 result, in the chamber Ch1, from an area $A_{p1}$ and pressure $p_{ch1}$ and, in the chamber Ch2, from $A_{p2}$ and pressure $p_{ch2}$. The areas are defined in below "Table 1". State 1 is a state when the piston unit 3 moves toward the chamber Ch1 and state 2 is a state when the piston 7 moves towards the chamber Ch2.

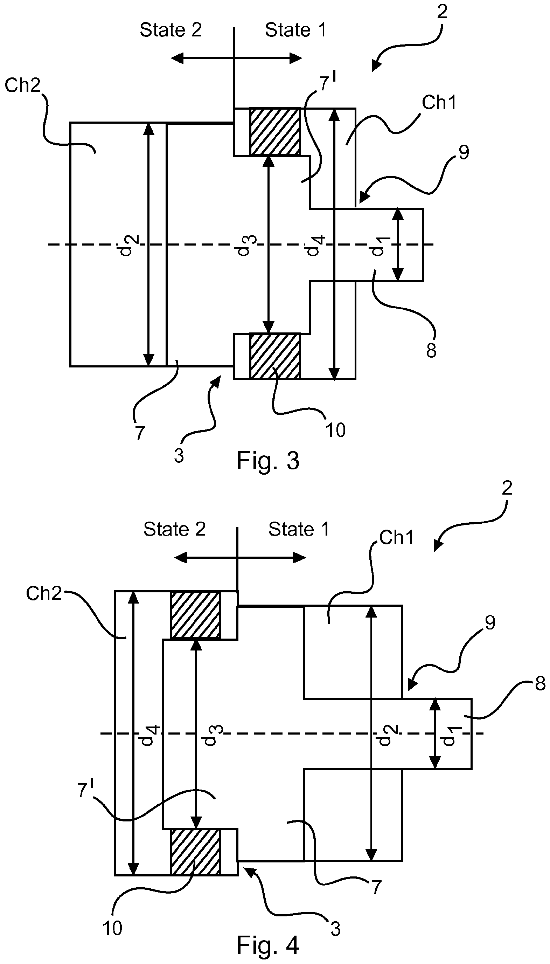

**Fig. 3** shows a second embodiment of the fluid cylinder 2 of the actuator system 1 of Fig. 1. The fluid cylinder 2 of the second embodiment differs from the fluid cylinder 2 according to the first embodiment in that the inner shape of the fluid cylinder 2 is stepped in the longitudinal direction such that the chamber Ch1 has a sectional diameter $d_4$, whereas, the chamber Ch2 has the sectional diameter $d_2$ which is smaller than the sectional diameter $d_4$.

Furthermore, the piston 7 of the piston unit 3 has a shoulder 7' in an axial direction of the piston 7 adjacent to the piston rod 8. The shoulder 7' has a sectional diameter $d_3$ which is smaller than the sectional diameter $d_2$ of the piston 7 but larger than the diameter $d_1$ of the piston rod 8.

Moreover, the piston unit 3 of the fluid cylinder 2 according to the second embodiment includes a floating piston 10 located in the chamber Ch1. The floating piston 10 is formed annular and has an inner diameter $d_3$ and an outer diameter $d_4$.

In this embodiment, the inner chamber of the fluid cylinder 2 is separated into the first chamber Ch1 and the second chamber Ch2 by the piston unit 3. The chambers Ch1, Ch2 are formed in a fluid tight manner.

The forces acting to the piston 7 result, in the chamber Ch1, from the area $A_{p1}$ defined in "Table 1" and pressure $p_{ch1}$ and, in the chamber Ch2, from area $A_{p2}$ defined in "Table 1" and pressure $p_{ch2}$.

State 1, referred to in "Table 1", is a state when the piston 7 is at least partially located in the portion of the fluid cylinder 2 having the sectional diameter $d_4$. State 2, also referred to in "Table 1", is a state when the piston 7 is completely located in the portion of the fluid cylinder 2 having the sectional diameter $d_2$.

Therefore, in state 1, the pressure $p_{ch1}$ in the chamber Ch1 acts to the piston unit 3 via an end face of the shoulder 7', without a sectional area of the piston rod 8, and via an end face of the floating piston 10 abutting to the piston 7. When the piston unit 3 moves towards chamber 2 so that the floating piston 10 abuts to a step of the fluid cylinder 2 formed by the diameter difference of the diameters $d_2$ and $d_4$, in state 2, the pressure $p_{ch1}$ merely acting to the end face of the shoulder 7' provides a force to the piston unit 3. Moreover, in state 1 and state 2, the pressure $p_{ch2}$ is acting to the constant area $A_{p2}$.

In the state 1, the piston 7 moves together with the floating piston 10 and, iny state 2, the piston 7 moves independently from the floating piston 10.

**Fig. 4** shows a third embodiment of the fluid cylinder 2 of the actuator system 1 of Fig. 1. The fluid cylinder 2 of the third embodiment differs from the fluid cylinder 2 according to the second embodiment in that the inner shape of the fluid cylinder 2 is stepped in the longitudinal direction such that the chamber Ch1 has a sectional diameter $d_2$, whereas, the chamber Ch2 has the sectional diameter $d_4$ which is larger than the diameter $d_2$. The piston 7 having the sectional diameter $d_2$ has the shoulder 7' having the sectional diameter $d_3$ on a side opposite of the piston rod 8 with respect to the piston 7. Moreover, the floating piston 10 is located in the chamber Ch2.

The forces acting to the piston 7 result, in the chamber Ch1, from the area $A_{p1}$ indicated in "Table 1" and pressure $p_{ch1}$ and, in the chamber Ch2, from $A_{p2}$ indicated in "Table 1" and pressure $p_{ch2}$.

State 2 is a state when the piston 7 is at least partially located in the portion of the fluid cylinder 2 having the sectional diameter $d_4$, so that the pressure in the chamber Ch2 acts to the piston 7 via the end face of the shoulder 7' and via the end face of the floating piston 10 abutting to the piston 7.

When the piston 7 moves towards chamber 1 so that the floating piston 10 abuts to a step of the fluid cylinder 2 formed by the diameter difference of the diameters $d_2$ and $d_4$, in state 1, the pressure $p_{ch2}$ merely acting to the end face of the shoulder 7' provides a force to the piston 7.

In state 1, the piston 7 moves independently from the floating piston 10 and, in state 2, the piston 7 moves together with the floating piston 10. Moreover, in state 1 and state 2, the pressure $p_{ch1}$ is acting to the constant area $A_{p1}$.

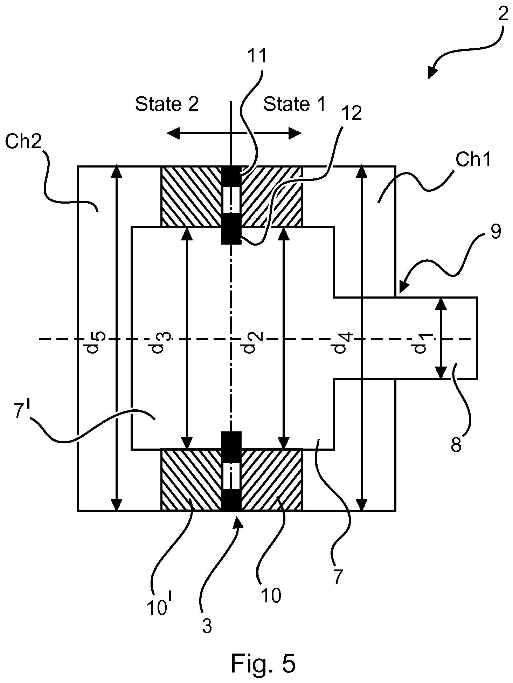

**Fig. 5** shows a fourth embodiment of the fluid cylinder 2 of the actuator system 1 of Fig. 1. The fluid cylinder 2 of the fourth embodiment differs from the fluid cylinder 2 according to the second and third embodiment in that the chamber Ch1 and the chamber Ch2 respectively have the sectional diameter $d_4$ and a sectional diameter $d_5$; however, the inner shape of the fluid cylinder 2 is not depicted in a stepped manner in the longitudinal direction so that the diameters $d_4$ and $d_5$ are depicted identically. Moreover, the inner wall of the fluid cylinder 2 is provided with a first stopper 11 between the chambers Ch1 and Ch2. Furthermore, the sectional diameter $d_3$ of the shoulder 7' and the sectional diameter $d_2$ of the piston 7 are depicted identically. The piston 7 and the shoulder 7' are defined as being separated by a second stopper 12. This definition is depicted by a dash-and-dot line.

In this fourth embodiment, the fluid cylinder 2 is provided with a first floating piston 10 and a second floating piston 10'. The first floating piston 10 is located in the chamber Ch1 and the second floating piston 10' is located in the chamber Ch2. Depending on a direction of the motion of the piston 7 having the shoulder 7', the two floating pistons 10, 10' abut to the first or second stoppers 11, 12.

In an alternative embodiment, the sectional diameter $d_2$ of the piston 7 is different from the sectional diameter $d_3$ of the shoulder 7', and the sectional diameters $d_4$ and $d_5$ are different. Also in this alternative embodiment, both chambers Ch1 and Ch2 accommodate one of the floating pistons 10, 10' and the first floating piston 10 in the chamber Ch1 is joined to the piston 7 in a releasable manner and the second piston 10' in the chamber Ch2 is joined to the shoulder 7' in a releasable manner in order to transmit a force exerted by the respective pressure $p_{ch1}$, $p_{ch2}$ to the piston 7 or the shoulder 7'.

The forces acting to the piston 7 result, in the chamber Ch1, from the area $A_{p1}$ and pressure $p_{ch1}$ and, in the chamber Ch2, from $A_{p2}$ and pressure $p_{ch2}$. The areas are defined in below "Table 1".

State 1, in this embodiment, is a state when the piston 7 is completely located in the chamber Ch1 such that the first floating piston 10 abuts to the second stopper 12 without abutting to the first stopper 11. Therefore, the pressure in the chamber Ch1 acts to the piston unit 3 via the end face of the piston 7 and via the end face of the first floating piston 10 abutting to the second stopper 12. In state 1, in chamber Ch2, the forces result from the pressure $p_{ch2}$ and from the area $A_{p2}$ without the end face of the second floating piston 10' since the second floating piston 10' located in the chamber Ch2 abuts to the stopper 11 and does not contribute to a force exerted by the pressure $p_{ch2}$ to the piston unit 3.

When the piston unit 3 moves towards chamber 2 so that the first floating piston 10 abuts to the stopper 11 of the fluid cylinder 2, the force transmitted by the first floating piston 10 to the piston unit 3 stops and the force is merely exerted by the pressure $p_{ch1}$ acting to the end face of the piston 7.

State 2, in this embodiment, is a state when the shoulder 7' is completely located in the chamber Ch2 such that the second floating piston 10' abuts to the second stopper 12 without abutting to the first stopper 11. Therefore, the pressure in the chamber Ch2 acts to the shoulder 7' via the end face of the shoulder 7' and via the end face of the second floating piston 10' abutting to the second stopper 12 joined to the piston 7. In state 2, in chamber Ch1, the forces result from the pressure $p_{ch1}$ and from the area $A_{p1}$ without the end face of the first floating piston 10 since the first floating piston 10 located in the chamber Ch1 abuts to the stopper 11 and does not contribute to a force exerted by the pressure $p_{ch1}$ to the piston unit 3.

When the piston unit 3 moves towards chamber 1 so that the second floating piston 10' abuts to the stopper 11 of the fluid cylinder 2, the force transmitted by the second floating piston 10' to the piston unit 3 stops and the force is merely exerted by the pressure $p_{ch2}$ acting to the end face of the shoulder 7'.

The depicted sectional diameters $d_1$ to $d_5$ of the fluid cylinder 2 and of the piston unit 3 are nominal dimensions considering necessary clearances for moving the components with respect to one another and necessary piston seals (not shown) as the case may be.

In any embodiments described above, alternatively, the inner shape of the fluid cylinder 2 and the cross sections of the piston 7, the shoulder 7', the floating pistons 10, 10' and the piston rod 8 of the piston unit 3 are not circular but have other shapes corresponding to the inner shape of the fluid cylinder 2 and to the piston rod orifice 9

Table 1

| | Fig 2. | | Fig 3. | | Fig 4. | | Fig 5. | |
|---|---|---|---|---|---|---|---|---|
| | State 1 | State 2 | State 1 | State 2 | State 1 | State 2 | State 1 | State 2 |
| $A_{p1}$ | $\frac{(d_2^2 - d_1^2)\pi}{4}$ | | $\frac{(d_4^2 - d_1^2)\pi}{4}$ | $\frac{(d_3^2 - d_1^2)\pi}{4}$ | $\frac{(d_2^2 - d_1^2)\pi}{4}$ | | $\frac{(d_4^2 - d_1^2)\pi}{4}$ | $\frac{(d_2^2 - d_1^2)\pi}{4}$ |
| $A_{p2}$ | $\frac{d_2^2\pi}{4}$ | | $\frac{d_2^2\pi}{4}$ | | $\frac{d_3^2\pi}{4}$ | $\frac{d_4^2\pi}{4}$ | $\frac{d_3^2\pi}{4}$ | $\frac{d_5^2\pi}{4}$ |
| $m_p$ | $m_{p1}$ | | $m_{p1} + m_{p2}$ | $m_{p1}$ | $m_{p1}$ | $m_{p1} + m_{p2}$ | $m_{p1} + m_{p2}$ | $m_{p1} + m_{p3}$ |

Possible states $u_{sv}$ of the solenoid valves 5 are changed and result in corresponding pressures in the connected chambers according to Table 2.

Table 2

|  | Chamber - Ambient pressure | Closed chamber | Chamber - Supply pressure |
|---|---|---|---|
| $u_{sv}$ | -1 | 0 | 1 |

Based on a Kalman filter algorithm and on an extended Kalman filter algorithm, methods have been developed to estimate the system states, pressures in the chambers Ch1 and Ch2, temperatures in the chambers Ch1, Ch2, and masses of a fluid. Moreover, a velocity of the piston 7, an acceleration of the piston 7, or an actuation force exerted by the piston 7 which correspond to the respective feature of the piston unit 3 are estimated based on the position of the piston 7. In an alternative embodiment, instead of the Kalman filter or of the extended Kalman filter, another control technologic observer model, e.g. a Luenberger observer, can be used.

A state vector, an output vector, and control vectors are defined as in the following (Expressions 1 to 4):

$$\underline{x} = \begin{bmatrix} p_{ch1} \\ p_{ch2} \\ m_{ch1} \\ m_{ch2} \\ x_p \\ v_p \end{bmatrix}, \underline{y} = [x_p], \underline{u}_{sv1} = [\dot{m}_{sv1}], \underline{u}_{sv2} = [\dot{m}_{sv2}] \quad \text{(Expressions 1 to 4)}$$

In these vectors, $m_{ch}$ is a mass of the fluid, $p_{ch}$ is a pressure of the chamber Ch1, Ch2, $x_p$ is the position of the piston 7, $v_p$ is the velocity of the piston 7, $u_{sv}$ is a state of the solenoid valves 5 (see Table 2), and $\dot{m}_{sv}$ is a mass flow rate of the solenoid valve 5. Subscript $1$ refers to the chamber Ch1 and subscript $2$ refers to the chamber Ch2.

The state-space representation is expressed in Expression 5:

$$\dot{\underline{x}} = A\underline{x} + \sum_{sv1=0}^{n_1} B_{sv1}\underline{u}_{sv1} + \sum_{sv2=0}^{n_2} B_{sv2}\underline{u}_{sv2} \quad \text{(Expression 5)}$$

In this state-space representation, $n_1$ and $n_2$ are numbers of the solenoid valves 5 connected to one of the chamber Ch1 and chamber Ch2. $B_{sv}$ are defined in below Expression 8, and $\underline{u}_{sv}$ are indicated in Table 2.

The fluid cylinder 2 is driven by the solenoid valves 5 which are "on/off" valves. Alternatively, the fluid cylinder can be driven by proportional valves. If the fluid cylinder 2 is driven by "on/off" valves, the mass flow rate can be estimated according to the Bernoulli expression modified by the solenoid valve state (Expression 6):

$$\dot{m}_{ch} = \sum_{sv=1}^{n} (u_{sv} \cdot \alpha_{sv} \cdot \dot{m}_{sv}) \quad \text{(Expression 6)}$$

Wherein $n$ is the number of the solenoid valves 5 connected to one of the chambers Ch1, Ch2, $u_{sv}$ is the state of the solenoid valve (see Table 2), $\alpha_{sv}$ is a contraction coefficient of the fluid, and $\dot{m}_{sv}$ is the mass flow rate between connected volumes.

When using the Kalman filter-based method, a linear state-space representation is used, wherein the state and input matrices are as following (Expression 7, 8):

$$A = \begin{bmatrix} \dfrac{-\kappa_{air}\dot{V}_{ch1}}{V_{ch1}} & 0 & 0 & 0 & \dfrac{\kappa_{air}F_{p1}\dot{V}_{ch1}+k_{ht1}A_{ht1}A_{p1}\Delta T_1}{V_{ch1}^2} & \dfrac{-\kappa_{air}F_{p1}}{V_{ch1}} \\ 0 & \dfrac{\kappa_{air}\dot{V}_{ch2}}{V_{ch2}} & 0 & 0 & \dfrac{\kappa_{air}F_{p2}\dot{V}_{ch2}-k_{ht2}A_{ht2}A_{p2}\Delta T_2}{V_{ch2}^2} & \dfrac{\kappa_{air}F_{p2}}{V_{ch2}} \\ 0 & 0 & 0 & 0 & 0 & 0 \\ 0 & 0 & 0 & 0 & 0 & 0 \\ 0 & 0 & 0 & 0 & 0 & 1 \\ \dfrac{\frac{\delta \Sigma F}{\delta p_{Ch1}}}{m_p} & \dfrac{\frac{\delta \Sigma F}{\delta p_{Ch2}}}{m_p} & 0 & 0 & 0 & \dfrac{\frac{\delta \Sigma F}{\delta v}}{m_p} \end{bmatrix} \quad \text{(Expression 7)}$$

$$B_{sv1} = \begin{bmatrix} \dfrac{\kappa_{air}R_{air}T_{sv1}}{V_{ch1}} \\ 0 \\ 1 \\ 0 \\ 0 \\ 0 \end{bmatrix}, \ B_{sv2} = \begin{bmatrix} 0 \\ \dfrac{\kappa_{air}R_{air}T_{sv2}}{V_{ch2}} \\ 0 \\ 1 \\ 0 \\ 0 \end{bmatrix} \quad \text{(Expression 8)}$$

Wherein $\kappa_{air}$ is a heat capacity ratio, $F_p$ is a pressure force, $V_{ch}$ is a volume of the chambers Ch1, Ch2, $\kappa_{ht}$ is a heat transfer coefficient, $A_{ht}$ is a heat transfer area, $\Delta T$ is a temperature difference between the chamber Ch1, Ch2 and an environment, $m_p$ is a mass of the piston 7, and $\Sigma F$ is a force applied to the piston 7.

In the case of the extended Kalman filter-based method, as used in the described embodiments, non-linear expressions are used which are defined as following (Expression 9, 10):

$$\dot{\underline{x}} = f(\underline{x}, \underline{u}) \quad \text{(Expression 9)}$$

$$\begin{bmatrix} \dot{p}_{ch1} \\ \dot{p}_{ch2} \\ \dot{m}_{ch1} \\ \dot{m}_{ch2} \\ \dot{x}_p \\ \dot{v}_p \end{bmatrix} = \begin{bmatrix} \dfrac{\kappa_{air}R_{air}T_{inw1}\dot{m}_{ch1}-\kappa_{air}\dot{V}_{ch1}p_{ch1}-k_{ht1}A_{ht1}\Delta T_1}{V_{ch1}} \\ \dfrac{\kappa_{air}R_{air}T_{inw2}\dot{m}_{ch2}-\kappa_{air}\dot{V}_{ch2}p_{ch2}-k_{ht2}A_{ht2}\Delta T_2}{V_{ch2}} \\ \dot{m}_{ch1} \\ \dot{m}_{ch2} \\ v_p \\ \dfrac{\Sigma F}{\Sigma m_p} \end{bmatrix} \quad \text{(Expression 10)}$$

The Kalman filter-based method and the extended Kalman filter-based method use the state estimation of a previous time step to estimate a current state. Alternatively, the method has another structure.

The expressions are used for double acting cylinders, however, alternatively, they are used for single acting cylinders.

The expressions describe a behavior of a fluid cylinder 2 having a single piston according to the first embodiment of the fluid cylinder 2 (Fig. 2). However, alternatively, by changing the parameters of Table 1 according to a scheduling signal which is a detected position of the piston 7, the expressions can be used for fluid cylinders 2 comprising a piston unit 3 having one floating piston 10 as in the second and third embodiments (Figs. 3 and 4) or two floating pistons 10, 10' as in the fourth embodiment (Fig. 5).

In the following, an example of an estimation of system states of the fluid cylinder 2 according to the third embodiment (Fig. 4) is described.

The fluid cylinder 2 is actuated by two 3-way 2-position solenoid valves 5 (Fig. 1). One of the solenoid valves 5 is respectively connected to one of the chambers Ch1, Ch2. Alternatively, several solenoid valves 5 are connected to one of the chambers Ch1, Ch2 and the mass flow rates of the several solenoid valves 5 connected to one of the Chambers Ch1, Ch2 are summarized to estimate the mass of the fluid.

For performing the example of the estimation with a method for determining the system state of the fluid cylinder 2 of the actuator system, the position of the piston 7 of the fluid cylinder 2 is detected, several system states are estimated from the detected position of the piston 7, and the system state is determined from the several system states.

The system states are chamber pressures of the fluid cylinder 2 and the position of the piston. In an alternative embodiment, alternatively or additionally, a temperature in the chamber Ch1, Ch2 of the fluid cylinder 2, a mass of the fluid, a piston velocity, an acceleration of the piston 7, and an actuation force exerted by the piston 7 are estimated.

The system states are estimated based on the estimated contraction coefficient $\alpha_{sv}$ which is tuned to improve the estimation accuracy. For tuning, the chamber pressure is measured and the contraction coefficient $\alpha_{sv}$ is adapted to minimize a deviation between the estimation and the measurement. Alternatively, the contraction coefficient is not tuned but the contraction coefficient is roughly predetermined for estimating the system states.

The commands to the solenoid valves 5 are used as scheduling signals to calculate mass flow rates of the mass of the fluid into or from the chamber Ch1, Ch2 of the fluid cylinder 2 to estimate the mass of the fluid. Alternatively, other signals are used as the scheduling signals.

The system states are estimated based on a friction parameter of the fluid cylinder 2, and the friction parameter is tuned to improve the estimation accuracy in the current step. For tuning, the piston position is measured and the friction parameter is adapted to minimize a deviation between the estimation and the measurement. Alternatively, the friction parameter is not tuned but a roughly predetermined friction parameter is used for the estimation of the system parameters.

The method for determining the system state of the fluid cylinder is used for synchronization a gearbox during gear change. Alternatively, the method is used another application, e.g., a control of engaging or disengaging a clutch.

In this example, the piston 8 is moved from a first situation where the piston 7 is in a right-hand end position in the cylinder 2 to a second situation of the position of the piston 7 at a boundary line between state 1 and state 2 as shown in Fig. 4.

As described above, basically, the floating piston 10 moves together with the piston 7 on a first condition and, alternatively, the piston 7 moves independently from the floating piston 10 on a second condition and the system states are estimated depending on the presence of the first or second condition. In this embodiment, the second condition, wherein the piston 7 moves independently from the floating piston 10, exists.

As mentioned above, the commands to the solenoid valves 5 are used as the scheduling signals, however, alternatively, the detected position of the piston 3 is used as a scheduling signal for estimating a behavior of the fluid cylinder 2 with a floating piston 10, 10 on the first or second condition.

A predicted state estimate is calculated as following (Expression 11):

$$\begin{bmatrix} \dot{p}_{ch1} \\ \dot{p}_{ch2} \\ \dot{m}_{ch1} \\ \dot{m}_{ch2} \\ \dot{x}_p \\ \dot{v}_p \end{bmatrix} = \begin{bmatrix} \dfrac{\kappa_{air}R_{air}T_{amb}\alpha_{sv1}\dot{m}_{sv1} - \kappa_{air}\frac{(d_2^2-d_1^2)\pi}{4}v_{p1}p_{ch1} - k_{ht1}A_{ht1}(T_1-T_{amb})}{V_{ch1}} \\ \dfrac{\kappa_{air}R_{air}T_2\alpha_{sv2}\dot{m}_{sv2} + \kappa_{air}\frac{d_3^2\pi}{4}v_{p1}p_{ch2} - k_{ht2}A_{ht2}(T_2-T_{amb})}{V_{ch2}} \\ \alpha_{sv1}\dot{m}_{sv1} \\ \alpha_{sv2}\dot{m}_{sv2} \\ v_{p1} \\ \dfrac{\frac{(d_2^2-d_1^2)\pi}{4}p_{ch1} - \frac{d_3^2\pi}{4}p_{ch2} + \frac{d_1^2\pi}{4}p_{amb} - \frac{(d_2^2-d_3^2)\pi}{4}p_{amb} - F_{friction}}{m_{p1}} \end{bmatrix} \quad \text{(Expression 11)}$$

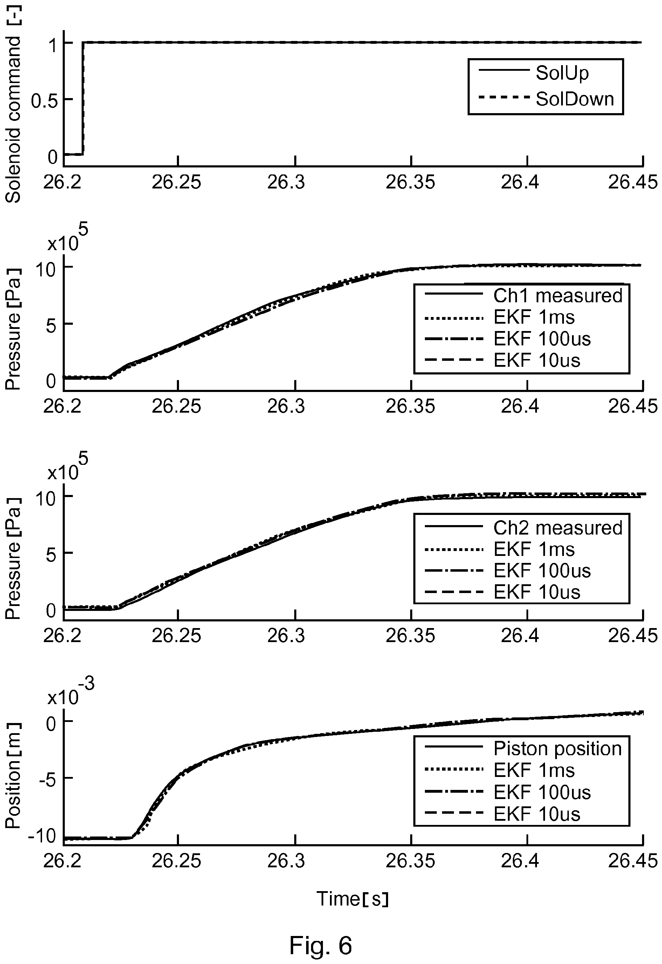

**Fig. 6** shows a result of the estimation of system states performed by the extended Kalman filter. The result refers to the above-mentioned example.

The extended Kalman filer is applied to update the predicted state estimate with the measured position.

In the uppermost diagram of Fig. 6, a command to switch the two solenoid valves 5 to provide the mass flow of the fluid to the chambers Ch1, Ch2 of the fluid cylinder 2 is output at 26.21 sec.

In the second diagram of Fig. 6, the progress of an increase in pressure in the first chamber Ch1 is depicted. A solid line illustrates the progress of measured values for proving the accuracy of the estimation. A dotted line illustrates the progress of estimated values estimated at a clock frequency of 1 ms, a dash-and-dot line illustrates the progress of the estimated values estimated at a clock frequency of 100 µs, and a dashed line illustrates the progress of the estimated values estimated at a clock frequency of 10 µs. The increase in pressure starts with a delay from the switching command to the solenoid valves at about 26.222 sec.

As to be seen from the second diagram of Fig. 6, the progress of the increase in pressure in the first chamber Ch1 of the estimated values is slightly below the measured values but it is very well suitable for determining this system state.

In the third diagram of Fig. 6, the progress of an increase in pressure in the second chamber Ch2 is depicted. A solid line illustrates the progress of measured values for proving the accuracy of the estimation. A dotted line illustrates the progress of estimated values estimated at a clock frequency of 1 ms, a dash-and-dot line illustrates the progress of the estimated values estimated at a clock frequency of 100 $\mu$s, and a dashed line illustrates the progress of the estimated values estimated at a clock frequency of 10 $\mu$s. The increase in pressure starts with a delay from the switching command to the solenoid valves at about 26.223 sec.

As to be seen from the third diagram of Fig. 6, the progress of the increase in pressure in the second chamber Ch2 of the estimated values is slightly below the measured values but it is very well suitable for determining the this system state.

In the lowermost diagram of Fig. 6, the position of the piston 7 is depicted. A solid line illustrates the measured position. A dotted line illustrates the estimated position estimated at a clock frequency of 1 ms, a dash-and-dot line illustrates the position estimated at a clock frequency of 100 $\mu$s, and a dashed line illustrates the position estimated at a clock frequency of 10 $\mu$s. A motion of the piston starts with a delay from the switching command to the solenoid valves and the increase in pressure in the first and second chamber Ch1, Ch2 at about 26.23 sec.

As to be seen from Fig. 6, the measured position approximately correspond to the estimated values which proves that the extended Kalman filer is very well suitable for estimating the system states.

Although the present invention has been described with reference to specific features and embodiments thereof, it is evident that various modifications and combinations can be made thereto without departing from the scope of the invention defined by the appended claims.

REFERENCE LIST

| | |
|---|---|
| 1 | actuator system |
| 2 | fluid cylinder |
| 3 | piston unit |
| 4 | position sensor |
| 5 | solenoid valve |
| 6 | Electronic Control Unit (ECU) |
| 7 | piston |
| 8 | piston rod |
| 9 | piston rod orifice |
| 10, 10' | first, second floating piston |
| 11 | first stopper |
| 12 | second stopper |

| | |
|---|---|
| Ch1 | chamber 1 |
| Ch2 | chamber 2 |
| $d_1$ to $d_5$ | diameter 1 to 5 |
| EKF | extended Kalman filter |
| SolUp | solenoid valve up |
| SolDown | solenoid valve down |

**Claims**

1. A method for determining a system state of a fluid cylinder (2) of an actuator system (1) comprising the steps:

   detecting a position of a piston (7) of the fluid cylinder (2); and
   estimating at least one system state from the detected position of the piston (7),
   wherein one of the system states is a chamber pressure of the fluid cylinder (2), a temperature in a chamber (Ch1, Ch2) of the fluid cylinder (2), or a mass of a fluid,
   **characterized in that**
   the system states are estimated based on an estimated contraction coefficient of the fluid, and the contraction coefficient is tuned to improve estimation accuracy.

**2.** The method of claim 1, wherein
several system states are estimated from the detected position of the piston (7).

**3.** The method of claim 1 or 2, wherein
the at least one system state is or the several system states are estimated using a Kalman filter or an extended Kalman filter.

**4.** The method of any preceding claim, wherein
a system state estimation of a current time step is performed by using a system state estimation of a previous time step updated by detection data of the detected position of the piston.

**5.** The method of any preceding claim, wherein
a command to a solenoid valve (5) is used as scheduling signal to calculate mass flow rates of the mass of the fluid into or from a chamber (Ch1, Ch2) of the fluid cylinder (2) to estimate the mass of the fluid.

**6.** The method of claim 5, wherein

several solenoid valves (5) connected to one chamber (Ch1, Ch2) of the fluid cylinder (2) are used, and
the mass flow rates of the several solenoid valves (5) connected the one chamber (Ch1, Ch2) are summarized to estimate the mass of the fluid.

**7.** The method of any preceding claims, wherein
one of the system states is a piston (7) velocity, an acceleration of the piston (7), or an actuation force exerted by the piston (7).

**8.** The method of claim 7, wherein
the system states are estimated based on a friction parameter of the fluid cylinder (2), and the friction parameter is tuned to improve estimation accuracy in the current time step.

**9.** The method of claim 7 or 8, wherein

the fluid cylinder (2) comprises a piston (7) and a floating piston (10, 10'),
the piston (7) moves together with the floating piston (10, 10') on a first condition, and, alternatively, the piston (7) moves independently from the floating piston (10, 10') on a second condition, and
the system states are estimated depending on the presence of the first or second condition.

**10.** The method of claim 9, wherein
the detected position of the piston (7) is used as a scheduling signal for estimating a behavior of the fluid cylinder (2) with floating pistons (10, 10') on the first or second condition.

**11.** A method for determining an actuating force in a fluid driven gear box actuator including the method for determining a system state of a fluid cylinder (2) of anyone of claims 6 to 9, wherein the method for determining the actuating force in the fluid driven gear box actuator is used for synchronization of a gearbox during gear change.

**12.** An actuator system (1), comprising

a fluid cylinder (2) including a piston (7),
a position sensor (4) configured to detect a position of the piston (7),
a solenoid valve (5) configured to control the fluid cylinder (2), and
an Electronic Control Unit (6) configured to determine a system state of the fluid cylinder (2) based on a method according to anyone of claims 1 to 11 wherein
the system states comprise at least one of a chamber pressure of the fluid cylinder (2), a temperature of a chamber (Ch1, Ch2) of the fluid cylinder (2), a mass of a fluid, a velocity of the piston (7), an acceleration of the piston (7), and an actuation force exerted by the piston (7).

**Patentansprüche**

1. Verfahren zum Bestimmen eines Systemzustands eines Fluidzylinders (2) eines Aktuatorsystems (1), umfassend die Schritte:

   Erfassen einer Position eines Kolbens (7) des Fluidzylinders (2); und
   Schätzen mindestens eines Systemzustands anhand der erfassten Position des Kolbens (7),

   wobei einer der Systemzustände ein Kammerdruck des Fluidzylinders (2), eine Temperatur in einer Kammer (Ch1, Ch2) des Fluidzylinders (2) oder eine Masse eines Fluids ist,
   **dadurch gekennzeichnet, dass**
   die Systemzustände basierend auf einem geschätzten Kontraktionskoeffizienten des Fluids geschätzt werden und der Kontraktionskoeffizient zum Verbessern der Schätzgenauigkeit abgestimmt wird.

2. Verfahren gemäß Anspruch 1, wobei
   mehrere Systemzustände anhand der erfassten Position des Kolbens (7) geschätzt werden.

3. Verfahren gemäß Anspruch 1 oder 2, wobei
   der mindestens eine Systemzustand oder die mehreren Systemzustände mittels eines Kalman-Filters oder eines erweiterten Kalman-Filters geschätzt wird/werden.

4. Verfahren gemäß einem vorhergehenden Anspruch, wobei
   eine Systemzustandsschätzung eines aktuellen Zeitschritts durch Verwendung einer Systemzustandsschätzung eines vorherigen Zeitschritts durchgeführt wird, die durch Erfassungsdaten der erfassten Position des Kolbens aktualisiert wird.

5. Verfahren gemäß einem vorhergehenden Anspruch, wobei
   ein Befehl an ein Magnetventil (5) als Zeitplanungssignal verwendet wird, um Massendurchflussraten der Masse des Fluids in oder aus einer Kammer (Ch1, Ch2) des Fluidzylinders (2) zu berechnen, um die Masse des Fluids zu schätzen.

6. Verfahren gemäß Anspruch 5, wobei

   mehrere Magnetventile (5) verwendet werden, die mit einer Kammer (Ch1, Ch2) des Fluidzylinders (2) verbunden sind, und
   die Massendurchflussraten der mehreren Magnetventile (5), die mit einer Kammer (Ch1, Ch2) verbunden sind, zusammengefasst werden, um die Masse des Fluids zu schätzen.

7. Verfahren gemäß vorhergehenden Ansprüchen, wobei
   einer der Systemzustände eine Geschwindigkeit des Kolbens (7), eine Beschleunigung des Kolbens (7) oder eine durch den Kolben (7) ausgeübte Betätigungskraft ist.

8. Verfahren gemäß Anspruch 7, wobei
   die Systemzustände basierend auf einem Reibungsparameter des Fluidzylinders (2) geschätzt werden und der Reibungsparameter abgestimmt wird, um die Schätzgenauigkeit im aktuellen Zeitschritt zu verbessern.

9. Verfahren gemäß Anspruch 7 oder 8, wobei

   der Fluidzylinder (2) einen Kolben (7) und einen schwimmenden Kolben (10, 10') umfasst, der Kolben (7) sich zusammen mit dem schwimmenden Kolben (10, 10') unter einer ersten Bedingung bewegt und, alternativ, der Kolben (7) sich unabhängig von dem schwimmenden Kolben (10, 10') unter einer zweiten Bedingung bewegt, und
   die Systemzustände je nach Vorliegen der ersten oder zweiten Bedingung geschätzt werden.

10. Verfahren gemäß Anspruch 9, wobei
    die erfasste Position des Kolbens (7) als Planungssignal zum Schätzen eines Verhaltens des Fluidzylinders (2) mit schwimmenden Kolben (10, 10') unter der ersten oder zweiten Bedingung verwendet werden.

**11.** Verfahren zum Bestimmen einer Betätigungskraft in einem fluidgetriebenen Getriebeaktuator, das das Verfahren zum Bestimmen eines Systemzustands eines Fluidzylinders (2) gemäß einem der Ansprüche 6 bis 9 beinhaltet, wobei das Verfahren zum Bestimmen der Betätigungskraft in dem fluidgetriebenen Getriebeaktuator zum Synchronisieren eines Getriebes während des Gangwechsels verwendet wird.

**12.** Aktuatorsystem (1), umfassend

einen Fluidzylinder (2) mit einem Kolben (7),
einen Positionssensor (4), der dazu ausgelegt ist, eine Position des Kolbens (7) zu erfassen,
ein Magnetventil (5), das dazu ausgelegt ist, den Fluidzylinder (2) zu steuern, und
ein elektronisches Steuergerät (6), das dazu ausgelegt ist, einen Systemzustand des Fluidzylinders (2) basierend auf einem Verfahren gemäß einem der Ansprüche 1 bis 11 zu bestimmen, wobei
die Systemzustände mindestens eines von einem Kammerdruck des Fluidzylinders (2), einer Temperatur einer Kammer (Ch1, Ch2) des Fluidzylinders (2), einer Masse eines Fluids, einer Geschwindigkeit des Kolbens (7), einer Beschleunigung des Kolbens (7) und einer durch den Kolben (7) ausgeübten Betätigungskraft umfassen.


**Revendications**

**1.** Procédé de détermination de l'état d'un système d'un cylindre (2) à fluide d'un système (1) à actionneur comprenant les stades :

on détecte une position d'un piston (7) du cylindre (2) à fluide ; et
on estime au moins un état du système à partir de la position détectée du piston (7),
dans lequel l'un des états du système est une pression dans une chambre du cylindre (2) à fluide, une température dans une chambre (Ch1, Ch2) du cylindre (2) à fluide ou une masse d'un fluide,
**caractérisé en ce que**
on estime les états du système sur la base d'un coefficient estimé de contraction du fluide, le coefficient de contraction étant accordé pour améliorer une précision de l'estimation.

**2.** Procédé suivant la revendication 1,
dans lequel on estime plusieurs états du système à partir de la position détectée du piston (7).

**3.** Procédé suivant la revendication 1 ou 2,
dans lequel on estime le au moins un état du système ou les plusieurs états du système, en utilisant une filtre de Kalman ou un filtre de Kalman étendu.

**4.** Procédé suivant l'une quelconque des revendications précédentes,
dans lequel on effectue une estimation de l'état du système à une phase de temps en cours, en utilisant une estimation de l'état du système d'une phase de temps précédente mise à jour par des données de détection de la position détectée du piston.

**5.** Procédé suivant l'une quelconque des revendications précédentes,
dans lequel on utilise une instruction donnée à une électrovanne (5) comme signal prévu pour calculer des débits massiques de la masse du fluide entrant ou sortant d'une chambre (Ch1, Ch2) du cylindre (2) à fluide pour estimer la masse du fluide.

**6.** Procédé suivant la revendication 5,

dans lequel on utilise plusieurs électrovannes (5) reliées à une chambre (Ch1, Ch2) du cylindre (2) à fluide, et on somme les débits massiques des plusieurs électrovannes (5) reliées à la une chambre (Ch1, Ch2) pour estimer la masse du fluide.

**7.** Procédé suivant l'une quelconque des revendications précédentes,
dans lequel l'un de l'état du système est une vitesse du piston (7), une accélération du piston (7) ou une force d'actionnement appliquée par le piston (7).

**8.** Procédé suivant la revendication 7,

dans lequel on estime les états du système sur la base d'un paramètre de frottement du cylindre (2) à fluide et on accorde le paramètre de frottement pour améliorer la précision de l'estimation dans la phase de temps en cours.

9. Procédé suivant la revendication 7 ou 8,

dans lequel le cylindre (2) à fluide comprend un piston (7) et un piston (10, 10') flottant, le piston (7) se déplace ensemble avec le piston (10, 10') flottant dans une première condition et, en alternance, le piston (7) se déplace indépendamment du piston (10, 10') flottant dans une deuxième condition, et
on estime les états du système en fonction de la présence de la première ou de la deuxième condition.

10. Procédé suivant la revendication 9,
dans lequel on utilise la position détectée du piston (7) comme signal prévu pour estimer un comportement du cylindre (2) à fluide avec des pistons (10, 10') flottants dans la première ou la deuxième condition.

11. Procédé de détermination d'une force d'actionnement dans un actionneur de boîte de vitesse entraîné par un fluide, comprenant le procédé de détermination d'un état du système d'un cylindre (2) à fluide suivant l'une quelconque des revendications 6 à 9, dans lequel le procédé de détermination de la force d'actionnement dans l'actionneur de la boîte de vitesse entraîné par un fluide est utilisé pour la synchronisation d'une boîte de vitesse pendant un changement de vitesse.

12. Système (1) à actionneur, comprenant

un cylindre (2) à fluide comprenant un piston (7),
un capteur (4) de position configuré pour détecter une position du piston (7),
une électrovanne (5) configurée pour commander le cylindre (2) à fluide, et
une unité (6) électronique de commande configurée pour déterminer un état du système du cylindre (2) à fluide sur la base d'un procédé suivant l'une quelconque des revendications 1 à 11, dans lequel
les états du système comprennent au moins l'un d'une pression dans une chambre du cylindre (2) à fluide, d'une température d'une chambre (Ch1, Ch2) du cylindre (2) à fluide, d'une masse d'un fluide, d'une vitesse du piston (7), d'une accélération du piston (7) et d'une force d'actionnement appliquée par le piston (7).

6

1

detected
piston position

4

2

5

## Fig. 1

2

Ch2

State 2 | State 1

Ch1

9

$d_2$

$d_1$

8

7

3

## Fig. 2

State 2    State 1

Ch2

$7^I$    2

Ch1

9

$d_2$    $d_3$    $d_4$    $d_1$

8

7    10

3

Fig. 3

State 2    State 1

Ch1    2

Ch2

9

8

$d_4$    $d_3$    $d_2$    $d_1$

$7^I$

7

10    3

Fig. 4

Fig. 5

Fig. 6

**EP 3 751 166 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1414059 A2
- JP 2017033464 A
- US 2018292278 A1